# EUROPÄISCHE PATENTSCHRIFT

(11) **EP 1 918 465 B1**
(45) Veröffentlichungstag und Bekanntmachung des Hinweises auf die Patenterteilung: **20.06.2012**
(21) Anmeldenummer: 08001594.4
(22) Anmeldetag: 24.01.2006
(51) Int. Cl.: E03C 1/08, B01D 35/04

(54) **Strahlbelüfter mit farbkodierter Durchflussklasse**
Jet regulator with colour-coded class of flow rate
Régulateur jet comprenant une codification en couleur du débit

(30) Priorität: 25.01.2005 DE 202005001101 U; 05.09.2005 DE 102005042212
(43) Veröffentlichungstag der Anmeldung: 07.05.2008
(62) Teilanmeldung aus: 06706384.2
(73) Patentinhaber: Neoperl GmbH, 79379 Müllheim (DE)
(72) Erfinder: Grether, Hermann, 79379 Müllheim (DE)
(74) Vertreter: Maucher, Wolfgang

(56) Entgegenhaltungen:
- EP-A- 0 733 748
- EP-A1- 0 733 748
- WO-A-2004/038112
- WO-A1-97/32244
- DE-A1- 3 817 270
- DE-A1- 4 413 060
- DE-A1- 10 027 986
- DE-A1- 19 618 692
- DE-C- 639 026
- DE-U1- 29 718 727
- DE-U1-202005 001 101
- DE-U1-202005 010 640
- GB-A- 2 233 246

## Beschreibung

Die Erfindung betrifft ein sanitäres Einbauteil, mit einem für Wasserauslaufarmaturen bestimmten Filtersieb, das als einstückige Kunststoffspritzgussteil ausgebildet ist und eine Anzahl von Durchfluss- oder Sieböffnungen hat, mit einem Strahlregler, der dem Filtersieb abströmseitig nachgeschaltet ist, und mit einem Durchflussmengenregler, der zwischen dem Filtersieb und dem Strahlregler angeordnet ist.

Man kennt bereits verschiedene sanitäre Einbauteile, die einen Strahlregler, einen Durchflussmengenregler und/oder einen Rückflussverhinderer aufweisen. Um die Funktion eines solchen sanitären Einbauteiles dauerhaft zu gewährleisten und um dem Eintritt von im Wasser mitgeführten Schmutzpartikeln in den Strahlregler, den Durchflussmengenregler oder den Rückflussverhinderer entgegenzuwirken, weisen die vorbekannten sanitären Einbauteile zuströmseitig meist ein Vorsatzsieb auf. Dabei ist dieses Vorsatzsieb in eine stirnseitige Aufnahmeöffnung des abströmseitig nachgeschalteten Strahlreglers oder dergleichen Bauteiles einsetzbar und dort mittels einer Rast- oder Schnappverbindung gehalten.

Auch kennt man bereits Filtersiebe, die Strahlreglern, Durchflussmengenreglern, Durchflussbegrenzern und/ oder Rückflussverhinderern in Strömungsrichtung vorgeschaltet sind und diese sanitären Einbauteile gegen die im Wasser mitgeführten Schmutzpartikel schützen sollen. Diese, in eine Wasserleitung einsetzbaren Filtersiebe sind mit den sanitären Einzelteilen meist lösbar verbunden und werden als zusammengehörige Funktionseinheit in ein Auslaufmundstück eingesetzt, das am Wasserauslauf einer sanitären Auslaufarmatur lösbar befestigbar ist. Das Filtersieb ist regelmäßig aus einem gegebenenfalls undurchsichtig eingefärbten Kunststoff hergestellt, der die Sicht auf die abströmseitigen Einsetzteile versperrt. Da das eingefärbte Filtersieb die Sicht versperrt und da die Sicht erst recht bei einem in ein Auslaufmundstück bereits eingesetzten Einsetzteil versperrt ist, ist nicht ohne weiteres erkennbar, ob überhaupt und gegebenenfalls welche Einbauteile abströmseitig folgen und inwieweit diese Einbauteile funktionsfähig sind.

Aus der DE 639 026 C ist ein Wasserstrahlregler bekannt, der ein auf die Hahnmündung aufsetzbares Gehäuse hat, dessen auslaufseitige Gehäuseöffnung durch mehrere Siebe verschlossen ist. Da sich der Grad der Verschmutzung der Siebe bei den bisherigen Wasserstrahlreglern nicht erkennen lässt, besteht insbesondere bei einer ungewöhnlich schnellen Verschmutzung der Siebe die Gefahr, dass der Wasserstrahlregler von der Hahnmündung abgeschleudert wird. Um diesem Übelstand nun abzuhelfen, wird das gesamte Gehäuse des aus DE 639 026 vorbekannten Strahlreglers aus durchsichtigem Material hergestellt.

Aus der DE 196 18 692 A1 kennt man bereits eine Filtervorrichtung für Fluide, in deren rohrförmigem Gehäuse ein Filtergewebe vorgesehen ist. Um auch bei dieser vorbekannten Filtervorrichtung den Verschmutzungsgrad des Filtergewebes beurteilen zu können, ist das Gehäuse aus durchsichtigem Kunststoff herstellbar.

Aus der GB 2 233 246 A kennt man bereits einen Wasserfilter mit einem Filtergehäuse, in dessen Gehäuseinneren verschiedene Filterelemente und Filtermaterialien übereinander geschichtet sind. Bei dem aus GB 2 233 246 A vorbekannten Wasserfilter sind die Bestandteile des Filtergehäuses aus durchsichtigem Kunststoff hergestellt, so dass die im Gehäuseinneren befindlichen Filterelemente und Filtermaterialien von außen sichtbar sind.

In der DE 29 18 727 U1 ist bereits ein Strahlregler beschrieben, der auf der Zuströmseite seines Strahlreglergehäuses ein kegelförmig zulaufendes Vorsatzsieb mit einer Vielzahl von Sieböffnungen trägt. Das Vorsatz- oder Filtersieb des vorbekannten Strahlreglers dient dazu, die im Wasser mitgerissenen Kalkablagerungen oder mitgeführten Schmutzpartikel auszusieben und zurückzuhalten, bevor diese die kleinen Durchflussstrukturen im Inneren des Strahlreglers verstopfen und dessen Funktion beeinträchtigen können. Aus den Figuren in DE 29 18 727 U1 ist zu erkennen, dass der vorbekannte Strahlregler und das ihm vorgeschaltete Vorsatz- oder Filtersieb aus undurchsichtigem Kunststoff hergestellt sind.

Aus der DE 100 27 986 A1 ist bereits ein sanitäres Einbauteil der eingangs erwähnten Art mit einem Außengehäuse vorbekannt, das zumindest ein Gehäuseteil hat, welches eine zuströmseitige Einsetzöffnung aufweist, durch die wenigstens ein Durchflussmengenregler in das Gehäuseinnere einsetzbar ist. Das vorbekannte Einbauteil hat ein aus undurchsichtigem Kunststoff bestehendes und als Kunststoffspritzgussteil hergestelltes Filtersieb, das die zuströmseitige Stirnfläche des Einbauteiles bildet. Das vorbekannte Einbauteil weist im Inneren seines Außengehäuses auch einen Strahlregler auf, der dem Filtersieb und dem Durchflussmengenregler in Strömungsrichtung nachgeschaltet ist. Da in das Gehäuseteil statt des Durchflussmengenreglers wahlweise auch zumindest eine andere, dem Einbauteil zugeordnete Funktionseinheit eingesetzt werden kann, zeichnet sich das vorbekannte Einbauteil durch seinen modularen Aufbau aus. Das Filtersieb erschwert dem Anwender jedoch den Blick in das Gehäuseinnere des Außengehäuses, um die darin jeweils eingesetzte Funktionseinheit und deren hydraulische Eigenschaften zu erkennen; der Anwender ist vielmehr darauf angewiesen, das Filtersieb dazu vorübergehend vom Außengehäuse zu lösen.

Aus der EP 0 733 748 A1 ist eine ebenfalls aus einem Filter-oder Vorsatzsieb, aus einem Strahlregler und aus einem dazwischen geschalteten Durchflussmengenregler bestehende Einbauteile-Garnitur vorbekannt, die zum Einsetzen in ein Auslauf-Mündstück vorgesehen ist. Die als Filter- oder Vorsatzsieb, als Strahlregler und als dazwischen geschalteter Durchflussmengenregler ausgebildeten Einbauteile der vorbekannten Einbauteile-Garnitur weisen an ihren einander zugewandten Enden jeweils zueinander passende Anschlussmittel zum lösbaren Verbinden dieser Einbauteile auf. Da auf die zuströmseitige Stirnfläche des Strahlreglers sich der Durchflussmengenregler und zusätzlich oder stattdessen auch das Filter- oder Vorsatzsieb aufklipsen lässt, kann der Anwender von der Seite der vorbekannten Einbauteile-Garnitur aus zwar das Vorhandensein des Durchflussmengenreglers -, nicht aber dessen hydraulische Eigenschaften erkennen.

Aus der WO 97/32244 A1 kennt man bereits einen Durchflussmengenregler, der für eine Auslaufarmatur bestimmt ist. Der vorbekannte Durchflussmengenregler weist ein Gehäuse auf, in dem ein kegelstumpfförmiger Regelkern vorgesehen ist, den ein O-Ring aus elastischem Material umgreift. Die hydraulischen Eigenschaften des vorbekannten Durchflussmengenreglers lassen sich u.a. durch die Dicke des gewählten O-Ringes beeinflussen. Der den Regelkern umgreifende O-Ring wird abströmseitig von einem Kalibrierring abgestützt, dessen Dicke die axiale Lage des O-Ringes festlegt und dessen Durchmesser die Durchflussmenge des vorbekannten Durchflussmengenreglers kalibriert. Dabei kann die Einstellung der gewünschten Durchflussmenge durch Einlegen eines entsprechenden Kalibrierringes erfolgen, wobei die zur Verfügung stehenden Kalibrierringe durch Farben markiert sind. Die farbliche Codierung der Kalibrierringe erleichtert die Zuordnung des passenden O-Ringes und somit die Montage des vorbekannten Durchflussmengenreglers, - jedoch wird dem Anwender später ein Erkennen dieser farblichen Codierung durch den auf dem Kalibrierring jeweils aufliegenden O-Ring erschwert.

Es besteht daher die Aufgabe, ein sanitäres Einbauteil der eingangs erwähnten Art zu schaffen, das im montierten Zustand nicht nur eine Kontrolle seiner einzelnen Funktionseinheiten erlaubt, sondern auch eine Beurteilung der hydraulischen Durchflussleistung des Durchflussmengenreglers zu gestatten.

Die erfindungsgemäße Lösung dieser Aufgabe besteht bei dem sanitären Einbauteil der eingangs erwähnten Art darin, dass der Durchflussmengenregler eine Farbcodierung aufweist, die die hydraulische Durchflussleistung anzeigt und durch bloße Sichtkontrolle durch das aus transparentem Kunststoffmaterial bestehende Filtersieb erkennbar ist.

Das Vorsatz- oder Filtersieb des erfindungsgemäßen Einbauteiles ist aus einem transparenten Material hergestellt, um die Funktionalität dieses Filtersiebes gegebenenfalls auch im Zusammenwirken mit anderen Einsetzteilen selbst in montiertem Zustand ohne weiteres überprüfen zu können. Da das erfindungsgemäß verwendete Vorsatz- oder Filtersieb aus transparentem Material hergestellt ist, lässt es die Sicht auch auf seine Abströmseite selbst dann zu, wenn das Filtersieb in ein Auslaufmundstück eingesetzt ist. Der Hersteller oder der Anwender kann somit ohne weiteres kontrollieren, ob das Filtersieb mit weiteren Einsetzteilen im erfindungsgemäßen Einbauteil bereitsteht und ob sich die gegebenenfalls benötigten Einsetzteile in einem sichtbar funktionsfähigen Zustand befinden. Darüber hinaus lässt sich durch das transparente Vorsatzsieb hindurch erkennen, ob das sanitäre Einbauteil überhaupt beispielsweise mit einem Durchflussmengenregler bestückt ist. Da zumindest einzelne Bestandteile des zwischen Strahlregler und Vorsatzsieb angeordneten Durchflussmengenreglers farbig codiert sind, kann der Hersteller, der Händler oder auch der Endverbraucher anhand der durch das Vorsatzsieb durchscheinenden Farbzuordnung des Durchflussmengenreglers sofort erkennen, welche hydraulische Durchflussleistung sich damit verbindet.

Das erfindungsgemäße Filtersieb ist als Spritzgussteil ausgebildet. So lässt es sich mit geringem Aufwand und dennoch präzise herstellen.

Dabei wird eine Ausführungsform bevorzugt, bei der das Filtersieb abströmseitig mit zumindest einem sanitären Einsetz- oder Einbauteil lösbar verbindbar ist. Ein solches Filtersieb kann die Funktionalität der abströmseitig nachgeschalteten Einsetzteile auf zweifache Weise sichern, indem es zum einen die im Wasser mitgeführten Schmutzpartikel ausfiltert, die andernfalls die Funktion der Einsetzteile beeinträchtigen könnten, und indem es zum anderen eine Sichtkontrolle auf die Abströmseite des Filtersiebes und die gegebenenfalls dahinter liegenden Einsetzteile erlaubt.

Insbesondere Durchflussmengenregler sind vor allem auf ihrer Zuströmseite komplex und/oder mehrteilig ausgestaltet, so dass sich hier eine Sichtkontrolle in besonderem Maße empfiehlt. Das Filtersieb kann auch Bestandteil einer mehrteiligen Funktionseinheit sein.

Eine bevorzugte Ausführungsform gemäß der Erfindung sieht vor, dass der Durchflussmengenregler einen Steuerspalt hat, dessen Durchflussquerschnitt mittels eines unter dem Druck des zuströmenden Wassers verformbaren O-Rings aus elastischem Material veränderbar ist und dass der O-Ring durch das dem Durchflussmengenregler zugeordnete Filtersieb sichtbar ist. Da bei einer solchen Ausführungsform der O-Ring beweglich und dementsprechend locker auf dem Durchflussmengenregler befestigt ist, besteht die Gefahr, dass dieser zwingend benötigte O-Ring eventuell sogar während des Zusammenbaus des Durchflussmengenreglers verloren geht. Wird nun an der Zuströmseite des Durchflussmengenreglers ein üblicherweise undurchsichtiges Filtersieb befestigt, ist anschließend nicht mehr ohne weiteres erkennbar, dass der mit dem Filtersieb verbundene Durchflussmengenregler mangels O-Rings an sich funktionsunfähig ist. Mittels einer bloßen Sichtkontrolle durch das erfindungsgemäße Filtersieb ist demgegenüber ohne weiteres erkennbar, dass dem damit verbundenen Durchflussmengenregler der benötigte O-Ring fehlt.

Die vom Filtersieb ausgefilterten Schmutzpartikel legen sich am Umfangsrand des Filtersiebes fest, ohne die Sicht durch das Filtersieb zu beeinträchtigen, wenn das Filtersieb in Richtung zur Zuströmseite konvex oder kegelförmig gewölbt ist. Eine Sichtkontrolle auch durch die Sieböffnungen des erfindungsgemäßen Filtersiebes wird erleichtert, wenn die Sieb öffnungen des Filtersiebes etwa koaxial zueinander und vorzugsweise achsparallel zur Sieb-Längsachse angeordnet sind.

Das Filtersieb kann die abströmseitig benötigten Durchflussmengenregler oder dergleichen Einsetzteile gegen einen Verlust ihres O-Rings oder dergleichen Bestandteile sichern, wenn das Filtersieb mittels einer Rastverbindung mit dem zumindest einen sanitären Einsetzteil lösbar verbindbar ist. Dabei sieht eine bevorzugte Ausführungsform der Erfindung vor, dass das Filtersieb, der Strahlzerleger oder dergleichen Einsetzteil einen Ringbund hat, und dass dieser Ringbund mit zumindest einem Rastvorsprung, einer Rastnut oder dergleichen Rastmittel eines benachbarten Einsetzteiles lösbar verbindbar ist, welches an dessen zugewandter Stirnseite vorgesehen ist.

Eine bevorzugte Ausführungsform gemäß der Erfindung sieht vor, dass das Filtersieb in ihrem lichten Sieböffnungsquerschnitt sechseckige und wabenförmig angeordnete Sieböffnungen hat. Diese Ausführungsform zeichnet sich trotz seiner Sieböffnungen nicht nur durch einen vergleichsweise großen lich-ten Durchflussquerschnitt aus, vielmehr erlaubt dieser vergleichsweise große lichte Durchflussquerschnitt eine besonders gute Sichtkontrolle auf die Abströmseite des Filtersiebes und die gegebenenfalls dahinter liegenden Einsetzteile.

Weitere Einzelheiten der Erfindung ergeben sich aus den Ansprüchen sowie der Zeichnung. Nachstehend wird die Erfindung anhand eines bevorzugten Ausführungsbeispieles noch näher dargestellt.

Es zeigt:
- Fig. 1: eine sanitäre Funktionseinheit, die aus einem Strahlregler, einem Durchflussmengenregler sowie einem zuströmseitigen Filtersieb besteht,
- Fig. 2: die sanitäre Funktionseinheit aus Figur 1 in einer perspektivischen Darstellung auf ihre Zuströmseite,
- Fig. 3: die sanitäre Funktionseinheit aus Figur 1 und 2 in einer Draufsicht auf ihre Zuströmseite, wobei das aus transparentem Kunststoffmaterial bestehende Filtersieb auch eine Sichtkontrolle auf den ab- strömseitig dahinterliegenden Durchflussmengenreg- ler erlaubt,
- Fig. 4: den mit einem Vorsatz- oder Filtersieb verbundenen und als Lochplatte ausgestalteten Strahlzerleger eines ansonsten nicht weiter dargestellten Strahl- reglers in einem Längsschnitt,
- Fig. 5: das Vorsatz- oder Filtersieb aus Fig. 4 in einer Draufsicht,
- Fig. 6: das Vorsatz- oder Filtersieb und den Strahlzerleger aus Fig. 4 im Bereich ihrer Rast- oder Schnappver- bindung,
- Fig. 7: die zum Stand der Technik zählende Kombination ei- nes Vorsatzsiebes und eines Strahlreglers in einem Längsschnitt,
- Fig. 8: das Vorsatz- oder Filtersieb des vorbekannten Strahlreglers aus Fig. 7,
- Fig. 9: das Vorsatz- oder Filtersieb und den Strahlzerleger des aus dem Stand der Technik vorbekannten Strahl- reglers im Bereich der Rast- oder Schnappverbin- dung,
- Fig. 10: einen mit Fig. 4 vergleichbaren Strahlzerleger in einem Längsschnitt, der mit einem Vorsatz- oder Filtersieb verrastbar ist,
- Fig. 11: das Vorsatz- oder Filtersieb aus Fig. 10 in einer perspektivischen Darstellung,
- Fig. 12: den Strahlzerleger aus Fig. 10 in einer perspekti- vischen Darstellung,
- Fig. 13: den Strahlzerleger aus Fig. 10 und Fig. 12 in einer Detaildarstellung im Bereich seines, eine innenum- fangsseitige Rastnocke tragenden und durch eine schlitzartige Aussparung begrenzten Wandungsab- schnitts der inneren Umfangswandung,
- Fig. 14: den aus Strahlzerleger und Vorsatzsieb bestehenden Verbund gemäß den Fig. 10 bis 13 im Bereich der miteinander verrasteten Rastmittel,
- Fig. 15: den mit einem Vorsatzsieb verbundenen und als Loch- platte ausgestalteten Strahlzerleger eines ansons- ten nicht weiter dargestellten Strahlreglers in ei- nem Längsschnitt, wobei der Strahlzerleger mit ei- nem zuströmseitig vorstehenden Ringbund in eine Aufnahmeöffnung des Vorsatzsiebes einführbar ist und wobei an der die Aufnahmeöffnung begrenzenden Ringwandung des Vorsatzsiebes Rastnocken zum lösba- ren Verrasten am Strahlzerleger vorgesehen sind,
- Fig. 16: das Vorsatzsieb aus Fig. 15 in einer Unteransicht auf seine abströmseitige Stirnseite,
- Fig. 17: die zwischen dem Vorsatzsieb und dem Strahlzerleger vorgesehene Rastverbindung in einem Detail-Längs- schnitt aus Fig. 15,
- Fig. 18: den mit einem Vorsatzsieb verbundenen und als Loch- platte ausgestalteten Strahlzerleger eines ansons- ten nicht weiter dargestellten Strahlreglers in ei- nem Längsschnitt, wobei an dem zuströmseitig vor- stehenden und in eine Aufnahmeöffnung einsetzbaren Ringbund des Strahlzerlegers Rastnocken zum lösba- ren Verrasten mit dem Vorsatzsieb vorgesehen sind,
- Fig. 19: den Strahlzerleger aus Fig. 18 in einer Draufsicht auf seine zuströmseitige Stirnseite,
- Fig. 20: die in einem Detail-Längsschnitt gezeigte Rastverbindung zwischen dem Vorsatzsieb und dem Strahlzerleger aus den Fig. 18 und 19,
- Fig. 21: ein aus einem zuströmseitigen Vorsatzsieb, einem abströmseitigen Strahlzerleger und einem dazwischen angeordneten Durchflussmengenregler bestehendes sa- nitäres Einbauteil, wobei das aus transparentem Ma- terial bestehende und in einer Aufnahmeöffnung am Strahlzerleger einsetzbare Vorsatzsieb an seinem Siebumfang mehrere Rastnocken zum lösbaren Verras- ten mit dem Strahlzerleger aufweist,
- Fig. 22: das Vorsatzsieb aus Fig. 21 in einer Draufsicht auf seine zuströmseitige Stirnseite und
- Fig. 23: die in einem Detail-Längsschnitt gezeigte Rastver- bindung zwischen dem Vorsatzsieb und dem Strahlzer- leger aus den Figuren 21 und 22.

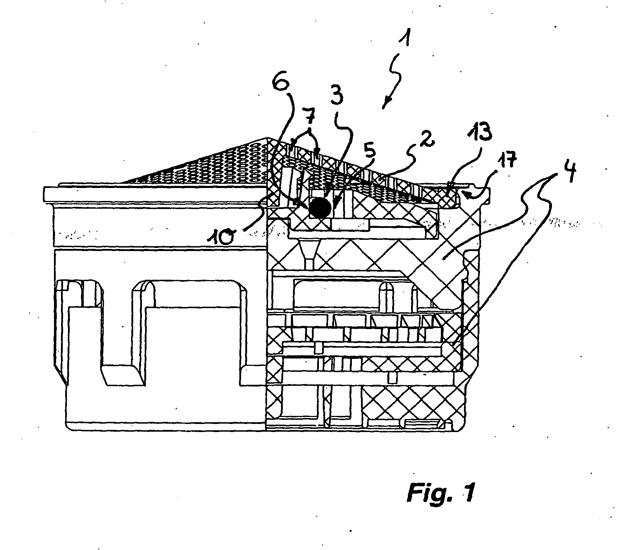

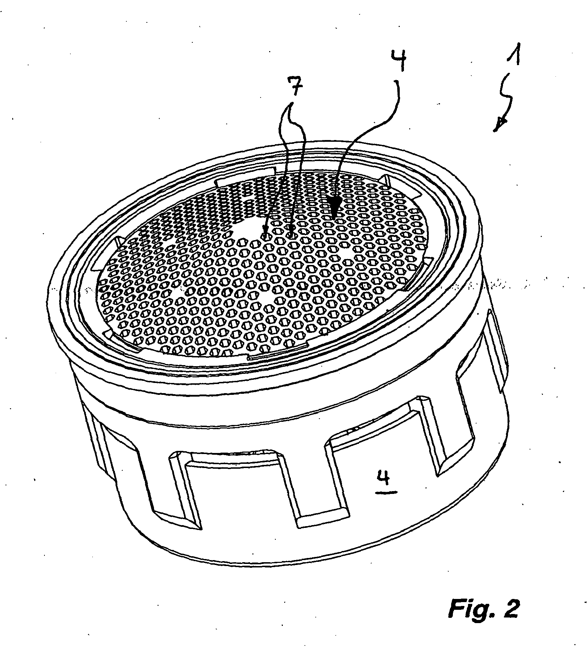

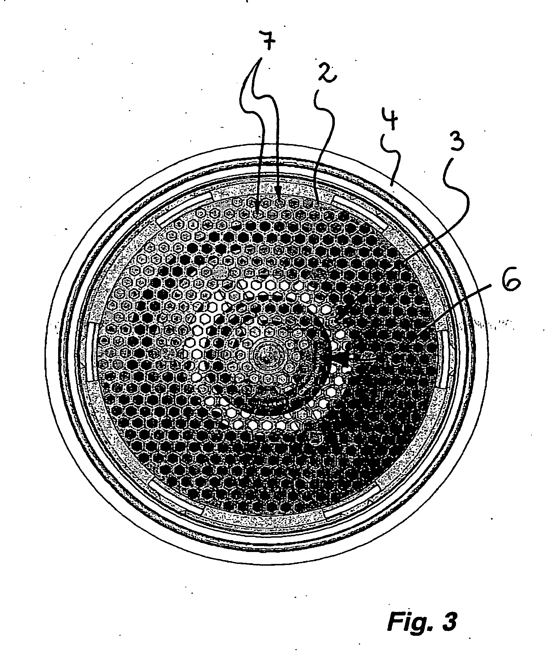

In den Figuren 1 bis 3 ist eine sanitäre Funktionseinheit 1 dargestellt, die in ein nicht weiter gezeigtes Auslaufmundstück einsetzbar ist, welches am Wasserauslauf einer sanitären Auslaufarmatur angeschraubt werden kann. Die sanitäre Funktionseinheit 1 weist ein zuströmseitiges Filter- oder Vorsatzsieb 2 auf, dem abströmseitig ein Durchflussmengenregler 3 und ein Strahlregler 4 nachgeschaltet sind.

Von den lösbar miteinander verbindbaren Bestandteilen 2, 3 und 4 der Funktionseinheit 1 ist der abströmseitige Strahlregler 4 dazu bestimmt, aus dem durchströmenden Wasser einen homogenen, perlend-weichen Wasserstrahl zu formen. Mit dem zwischen Strahlregler 4 und Filtersieb 2 angeordneten Durchflussmengenregler 3 wird die Wassermenge pro Zeiteinheit auf einen festgelegten Maximalwert eingeregelt. Das Filtersieb 2 hat u. a. die Aufgabe, die abströmseitig nachgeschalteten sanitären Einsetzteile 3, 4 vor den im Wasser eventuell mitgeführten Schmutzpartikeln zu bewahren, die andernfalls die Durchflussöffnungen dieser Einsetzteile 3, 4 verstopfen und deren Funktion beeinträchtigen könnten.

Das Filtersieb 2 ist als einstückiges Kunststoffspritzgussteil ausgebildet und aus einem transparenten Kunststoffmaterial hergestellt. Da das Filtersieb 2 aus transparentem Kunststoffmaterial hergestellt ist, gibt es die Sicht auf die Zuströmseite des mit dem Filtersieb 2 lösbar verbundenen sanitären Einsetzteiles 3 frei.

In Figur 1 ist erkennbar, dass der Durchflussmengenregler 3 einen Steuerspalt 5 hat, dessen Durchflussquerschnitt mittels eines unter dem Druck des zuströmenden Wassers verformbaren O-Rings 6 aus elastischem Material veränderbar ist. Da der O-Ring 6 beweglich am Durchflussmengenregler 3 befestigt ist, besteht die Gefahr, dass sich der O-Ring vom Durchflussmengenregler 3 lösen und verloren gehen kann.

Das Filtersieb 2 sichert nun die Funktionalität des Durchflussmengenreglers 3 in mehrfacher Weise; das Filtersieb 2 filtert nämlich zum einen die im Wasser mitgeführten Schmutzpartikel aus, die andernfalls die Funktion der Einsetzteile beeinträchtigen könnten -, zum anderen erlaubt es eine Sichtkontrolle auf die Abströmseite des Filtersiebes 2 und die dahinterliegenden Einsetzteile. Mittels einer bloßen Sichtkontrolle durch das Filtersieb 2 ist gegebenenfalls ohne weiteres erkennbar, dass dem damit verbundenen Durchflussmengenregler 3 der benötigte O-Ring 6 fehlt. Darüber hinaus sichert das mit dem Durchflussmengenregler 3 lösbar verbundene Filtersieb 2 den Durchflussmengenregler 3 gegen einen nachträglichen Verlust seines O-Rings 6.

Durch die Transparenz des Filtersiebes 2 ist es dem Anwender also ohne weiteres möglich, auch bei einem bereits in ein Auslaufmundstück eingesetzten Filtersieb 2 zu erkennen, ob überhaupt und gegebenenfalls welche Einsetzteile 3, 4 abströmseitig folgen und inwieweit diese Einsetzteile 3, 4 funktionsfähig sind.

Die Transparenz des Filtersiebes 2 wird noch dadurch erhöht, dass die Sieböffnungen 7 im wesentlichen koaxial zueinander und etwa achsparallel zur Sieb-Längsachse angeordnet sind. Somit ist auch die Durchsicht durch die Sieböffnungen 7 gewährleistet. Darüber hinaus ist das Filtersieb 2 in Richtung zur Zuströmseite konvex oder kegelförmig gewölbt, so dass eventuelle Schmutzpartikel sich nur am Umfangsrand des Filtersiebes 2 festsetzen und nicht die Siebfläche bedecken und die Sichtkontrolle durch das Sieb 2 behindern können.

Es ist ein besonderer Vorteil eines derart transparenten Filtersiebes, dass durch das Filtersieb 2 auch eine eventuelle Farbcodierung des darunter befindlichen Durchflussmengenreglers 3 erkennbar ist, welche Farbcodierung einen Rückschluss beispielsweise auf die Durchflussleistung dieses Reglers 3 erlaubt.

Das Filtersieb 2 weist in ihrem lichten Sieböffnungsquerschnitt sechseckige und wabenförmig angeordnete Sieböffnungen 7 auf. Durch diese Ausgestaltung der Sieböffnungen 7 des Filtersiebes 2 zeichnet sich das Filtersieb 2 nicht nur durch einen vergleichsweise großen Durchflussquerschnitt aus, vielmehr wird dadurch die Sichkontrolle durch das Filtersieb 2 noch zusätzlich begünstigt.

Aus Figur 1 ist erkennbar, dass das Filtersieb 2 mittels einer Rastverbindung mit dem Durchflussmengenregler 3 lösbar verbindbar ist. Das Filtersieb 2 weist dazu eine Rastnut 17 auf, die mit zumindest einer Rastnocke 13 oder dergleichen Rastmittel des Strahlreglers 4 lösbar verbindbar ist. Dieser Rastvorsprung 13 ist an der zuströmseitigen Stirnseite des Strahlreglers 4 vorgesehen. Da der Durchflussmengenregler 3 in einer zuströmseitigen Aussparung des Strahlreglers 4 eingesetzt und lösbar befestigt ist, sichert das den Durchflussmengenregler 3 überdeckende Filtersieb 2 auch diesen. Das mit dem Strahlregler 4 lösbar verrastete Filtersieb 2 hat dazu einen abströmseitigen Zentralsteg 10, der den in der Strahlregler-Aussparung befindlichen Durchflussmengenregler 3 zwischen Strahlregler 4 und Filtersieb 2 hält.

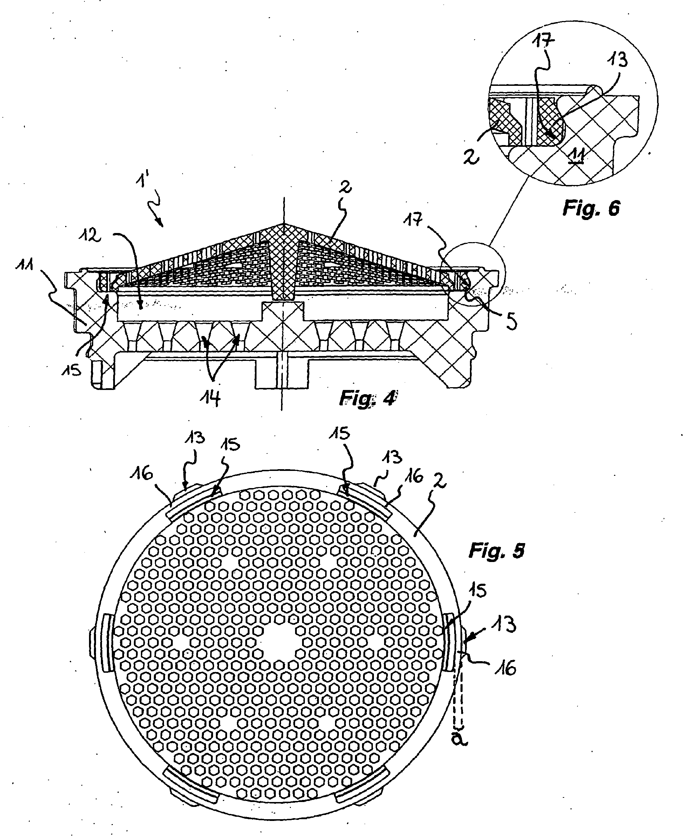

In den Fig. 4 bis 6 ist ein sanitäres Einbauteil 1' im Bereich eines zu einem ansonsten nicht weiter dargestellten Strahlregler gehörenden Strahlzerlegers 11 gezeigt. Der als Lochplatte ausgebildete und das zuströmende Wasser in zahlreiche Einzelstrahlen aufteilende Strahlzerleger 11 weist eine Aufnahmeöffnung 12 auf, in die ein zuströmseitiges Vorsatzsieb 2 lösbar einsetzbar ist. Während das Vorsatzsieb 2 ein erstes Bauteil bildet, ist der Strahlzerleger 11 hier als zweites Bauteil des auch aus weiteren Bestandteilen montierten Strahlreglers vorgesehen.

Die Bauteile 2, 11 sind mittels Rastmitteln lösbar verrastbar. Dazu sind am Vorsatzsieb 2 mehrere Rastnocken 13 vorgesehen, die in gleichmäßigen Abständen voneinander über den flanschartig ausgestalteten Außenumfang des Vorsatzsiebes 2 verteilt angeordnet sind.

Das Vorsatzsieb 2, dass im Wasser mitgeführte Schmutzpartikel von den Durchflussöffnungen 14 des Strahlzerlegers 11 fernhalten soll, weist im Bereich der Rastnocken 13 jeweils einen Schlitz 15 oder dergleichen Aussparung auf, der mit einem Abstand a vom Außenumfang dieses ersten Bauteiles 11 angeordnet ist. Jeder dieser Schlitze weist eine in Umfangsrichtung orientierte Längserstreckung auf Zwischen dem Außenumfang des ersten Bauteiles 11 und den benachbarten Schlitzen 15 wird jeweils ein das außenumfangsseitige Rastmittel 13 tragender Wandungsabschnitt 16 begrenzt, der in den Schlitz 15 oder dergleichen Aussparung federelastisch einlenkbar ist. Da dieser Wandungsabschnitt 16 federelastisch einlenkbar ist und aufgrund der Federelastizität auch wieder verrastend ausfedern kann, ist zum Verrasten der Bauteile 2, 11 eine reduzierte Einpresskraft bei einem vergleichsweise großen Toleranzfeld der Schnappverbindung möglich.

Die am Vorsatzsieb 2 vorgesehenen Rastnocken 13 können in einer umlaufenden Rastnut 17 an dem die Aufnahmeöffnung 12 begrenzenden Innenumfang des Strahlzerlegers 11 verrastet werden. Möglich ist aber auch, dass zumindest eine den Rastnocken 13 entsprechende Anzahl von partiellen Rastnuten vorgesehen sind und dass durch diese ineinandergreifenden Rastmittel die lagegerechte Zuordnung des ersten und des zweiten Bauteiles sichergestellt werden soll.

Wie aus der Draufsicht in Fig. 5 deutlich wird, verjüngen sich die Rastnocken 13 derart zu ihrem freien Nockenende hin, dass die in Umfangsrichtung orientierten Ränder der Rastnocken eine Schräge bilden. Aus Fig. 6 wird deutlich, dass die während des Ein- und Ausrastens aneinander gleitenden Kontaktflächen der Rastnocke einerseits und des die Rastnut begrenzenden Umfangsrandes andererseits korrespondierende Ein- und Aurastschrägen haben, die das Einpressen des Vorsatzsiebes in die entsprechende Aussparung des Strahlzerlegers und das Verrasten dieser Bauteile einerseits, - bedarfsweise aber auch das Entrasten und Lösen dieser Bauteile andererseits, mit geringem Aufwand erlauben und erleichtern. Soweit die Rastmittel 13, 17 eine lagegerechte Zuordnung der Bauteile 2, 11 sicherstellen sollen, ist es zweckmäßig, wenn sich die Anzahl von Rastnocken und Rastnuten entsprechen bzw. wenn die Anzahl der Rastnuten ein Vielfaches derjenigen der Rastnocken beträgt und wenn die Rastnocken und die Rastnuten im wesentlichen komplementär geformt sind.

Aus den Längsschnitten in Fig. 4 und 6 wird deutlich, dass die am Vorsatzsieb 2 vorgesehenen Rastnocken 13 in einer Querschnittsebene angeordnet sind. Diese in einer Querschnittsebene angeordnete Rastnocken 13 lassen sich mit geringem Aufwand in die Querschnittsebene der am Strahlzerleger 11 umlaufenden Rastnut 17 verrasten.

Um die Rastmittel 13, 17 auch bei einer vergleichsweise dickwandigen und biegesteifen Ausgestaltung der Bauteile 13, 17 leicht und mit geringer Einpresskraft miteinander verrasten und voneinander lösen zu können, ist der Abstand a des Schlitzes 15 oder dergleichen Aussparung vom Außenumfang des ersten Bauteiles 2 und somit die Dicke des einlenkbaren Wandungsabschnitts 16 in Abhängigkeit von der gewünschten Federelastizität dieses Wandungsabschnitts 16 gewählt.

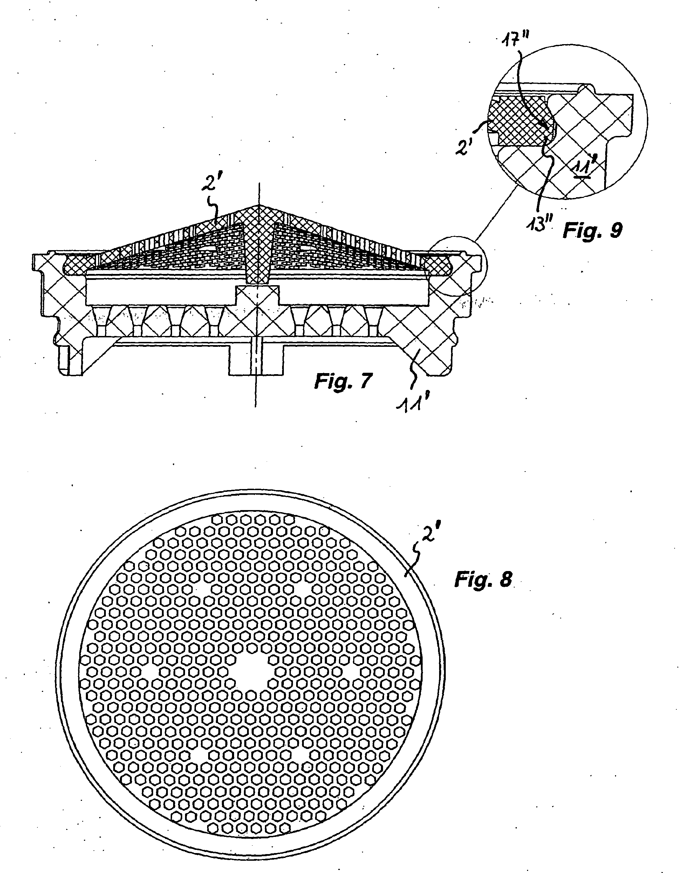

Zum Vergleich ist in den Fig. 7 bis 9 die gemäß dem vorbekannten Stand der Technik ausgestaltete Kombination eines Strahlzerlegers 11' und eines Vorsatzsiebes 2' dargestellt. Wie aus dem Längsschnitt in Fig. 7 zu erkennen ist, weist das Vorsatzsieb 2' an seinem Außenumfang eine umlaufende Rastnocke 13" auf, die in die ebenfalls umlaufende Rastnut 17" am Strahlzerleger 11' eingreift. Da diese Rastmittel 13", 17" beim Stand der Technik gemäß den Fig. 7 bis 9 vergleichsweise biegesteif sind, müssen die Bauteile 2', 11' mit hoher Genauigkeit und großem Aufwand hergestellt und mit hohem Einpressdruck miteinander verrastet werden.

Im Gegensatz dazu ist beim Einbauteil gemäß den Fig. 4 bis 6 zum Verrasten der Bauteile 2, 11 eine reduzierte Einpresskraft notwendig. Dabei können die Bauteile 2, 11 mit einem vergleichsweise großen Toleranzfeld der Schnappverbindung hergestellt werden. Obwohl das erste Bauteil 2 im Bereich seiner Rastmittel 13 zum Zwecke des Verrastens gezielt verformt werden kann, wird die Gesamtkontur des ersten Bauteiles 2 im Vergleich zum Bauteil 2' im Stand der Technik erhalten. Da bei der erfindungsgemäßen Funktionseinheit 1' die Bauteile 2, 11 auch mit einer geringeren Einpresskraft sicher und fest miteinander verbunden werden können, wird eine rasche und dynamische Montage bei der Herstellung und dem Zusammenbau des in Fig. 4 bis 6 dargestellten Einbauteiles 1' begünstigt.

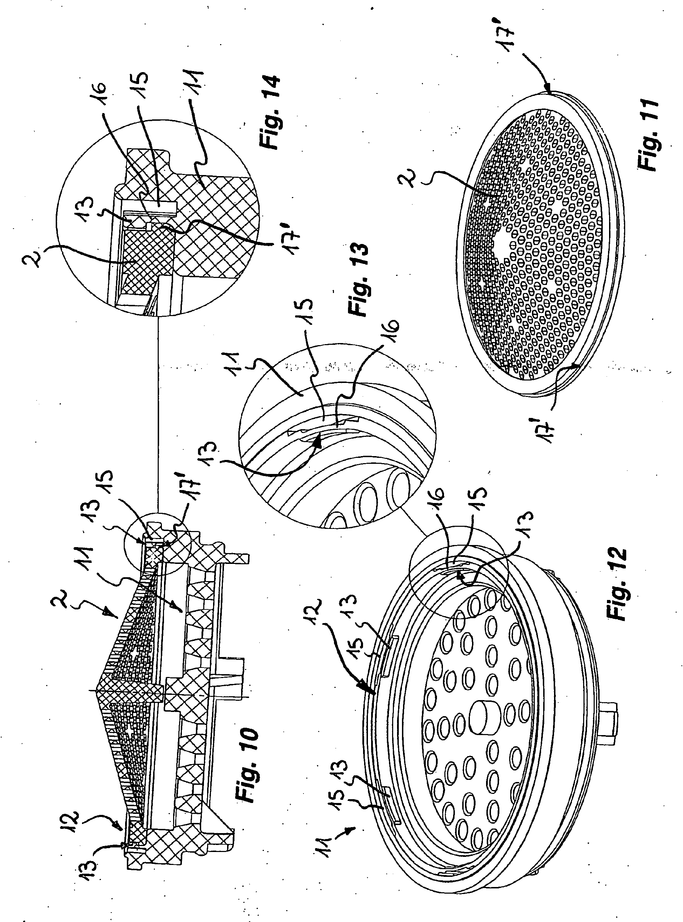

In den Fig. 10 bis 14 sind der als Lochplatte ausgestaltete Strahlzerleger 11 und das Vorsatzsieb 2 eines mit Fig. 4 bis 6 vergleichbaren Strahlreglers dargestellt. Bei dem in den Fig. 10 bis 14 dargestellten Strahlregler weist jedoch der Strahlzerleger 11 an dem die Aufnahmeöffnung 12 begrenzenden inneren Umfangsrand eine Anzahl von Rastnocken 13 auf, die mit einem als Rast-Gegenstück dienenden und flanschartig umlaufenden Rastvorsprung 17' am Vorsatzsieb 2 zusammenwirken.

Die innenumfangsseitig am Strahlzerleger 11 vorgesehenen Rastnocken 13 sind jeweils in einen Schlitz 15 oder dergleichen Aussparung federelastisch einlenkbar. Diese Aussparungen 15 sind an dem die das Vorsatzsieb 2 aufnehmenden Aufnahmeöffnung 12 begrenzenden Umfangsinnenrand des Strahlzerlegers 11 im Bereich der Rastnocken 13 vorgesehen.

Aus Fig. 12 wird deutlich, dass die Rastnocken 13 über den Innenumfang des Strahlzerlegers 11 gleichmäßig verteilt angeordnet sind. Fig. 13 veranschaulicht, dass der Abstand a des Schlitzes 15 oder dergleichen Aussparung vom Innenumfang des Strahlzerlegers 11 in Abhängigkeit von der gewünschten Federelastizität des einlenkbaren Wandungsabschnitts 16 gewählt sein kann.

Aus einem Vergleich der Fig. 11 und 14 ist zu erkennen, dass das Vorsatzsieb 2 an seinem Außenumfang im Bereich des mit den Rastnocken 13 zusammenwirkenden, umlaufenden Rast-Gegenstücks 17' flanschartig ausgestaltet ist.

In Fig. 14 ist erkennbar, dass die einander gegenüberliegenden Stirnränder der Rastnocken 13 einerseits und des am Vorsatzsieb 2 vorgesehenen Rast-Gegenstücks 17' andererseits scharfkantig ausgestaltet sind. Durch diese scharfkantige Ausgestaltung kann das Vorsatzsieb 2 mit dem entsprechenden Strahlzerleger 11 nahezu unlösbar verbunden werden. Möglich ist aber auch, an die einander gegenüberliegenden Stirnrändern der Rastnocken einerseits und des Rast-Gegenstücks 17' andererseits komplementär geformte Auflaufschrägen vorzusehen, die bei Bedarf auch ein Entrasten und Lösen dieser Bauteile 2, 11 erlauben.

Um ein federelastisches Einlenken der Rastnocken 13 oder dergleichen Rastmittel zu gestatten, können die entsprechenden Aussparungen 15 segmentiert und auf den Bereich der Rastnocken 13 oder dergleichen Rastmittel begrenzt werden. Möglich ist aber auch, die zum Einlenken der Rastnocken 13 bestimmte Aussparung 15 über den Bereich der Rastnocken 13 hinaus umlaufend auszugestalten.
Sofern die beiden Bauteile 2, 11 unlösbar miteinander verbunden werden sollen, kann es zweckmäßig sein, dass flanschartige Rast-Gegenstück 17' am Vorsatzsieb in entsprechenden Umfangssegmenten scharfkantig und in anderen Umfangssegmenten gerundet oder abgeschrägt auszugestalten, um den Herstellungsaufwand zu reduzieren und um ein entsprechendes Spritzgussteil auch aus einer vergleichsweise einfachen Spritzgussform leicht entformen zu können.

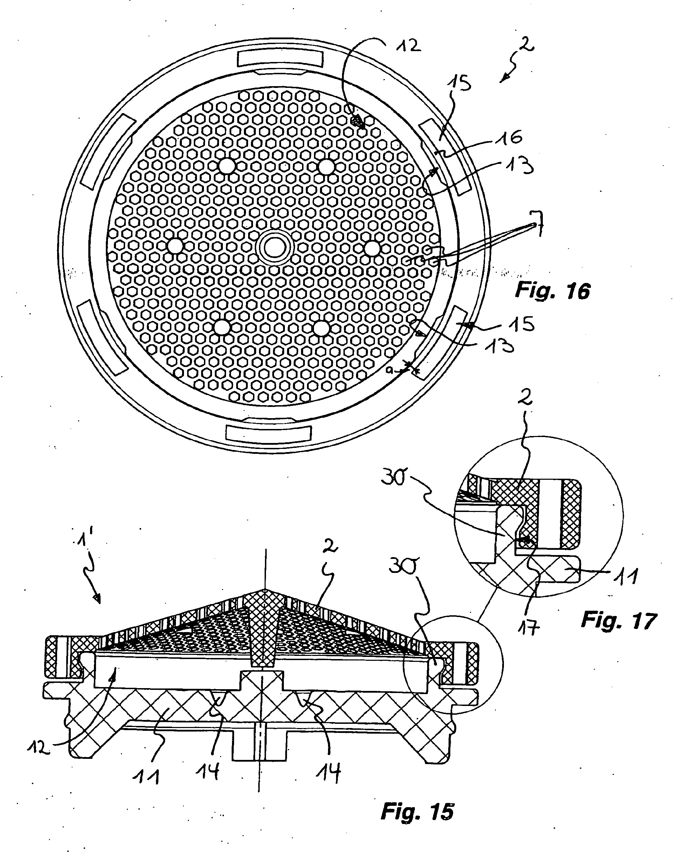

In den Figuren 15 bis 17 ist ein sanitäres Einbauteil 1' im Bereich eines, zu einem ansonsten nicht weiter dargestellten Strahlregler gehörenden Strahlzerlegers 11 gezeigt. Der als Lochplatte ausgebildete und das zuströmende Wasser in zahlreiche Einzelstrahlen aufteilende Strahlzerleger 11 weist an seiner zuströmseitigen Stirnseite einen axial vorstehenden Ringbund 30 auf, der außenumfangsseitig eine Rastnut 17 trägt und in eine Aufnahmeöffnung 12 des Vorsatzsiebes 2 einsetzbar ist. Wie aus der in Fig. 16 gezeigten Unteransicht auf die abströmseitige Stirnseite des Vorsatzsiebes 2 erkennbar ist, weist das Vorsatzsieb 2 an seinem, die Aufnahmeöffnung 12 begrenzenden Innenumfang mehrere Rastnocken 13 auf, die in gleichmäßigen Abständen über den Siebumfang verteilt angeordnet sind.

Während das Vorsatzsieb 2 ein erstes Bauteil bildet, ist der Strahlzerleger 11 hier als zweites Bauteil des auch aus weiteren Bestandteilen montierten Strahlreglers vorgesehen. Die Bauteile 2, 11 sind mittels Rastmitteln lösbar verrastbar. Das Vorsatzsieb 2, das im Wasser mitgeführte Schmutzpartikel von den hier nicht in der Schnittebene liegenden und daher nur angedeuteten Durchflussöffnungen 14 des Strahlzerlegers 11 fernhalten soll, weist im Bereich der Rastnocken 13 jeweils einen Schlitz 15 oder dergleichen Aussparung auf, der mit einem Abstand a vom Innenumfang dieses ersten Bauteiles 11 angeordnet ist. Jeder diese Schlitze 15 weist eine in Umfangsrichtung orientierte Längserstreckung auf.

Zwischen dem Innenumfang des ersten Bauteiles 2 und den benachbarten Schlitzen 15 wird jeweils ein das innenumfangseitige Rastmittel 13 tragender Wandungsabschnitt 16 begrenzt, der in den Schlitz 15 oder dergleichen Aussparung federelastisch einlenkbar ist. Da dieser Wandungsabschnitt 16 federelastisch einlenkbar ist und aufgrund der Federelastizität auch wieder verrastend ausfedern kann, ist zum Verrasten der Bauteile 2, 11 eine reduzierte Einpresskraft bei einem vergleichsweise großen Toleranzfeld der Schnappverbindung möglich. Wie aus dem Detail-Längsschnitt in Fig. 17 erkennbar ist, können die am Vorsatzsieb 2 vorgesehenen Rastnocken 13 in einer umlaufenden Rastnut 17 am Ringbund 30 des Strahlzerlegers 11 verrastet werden. Möglich ist aber auch, dass zumindest eine den Rastnocken 13 entsprechende Anzahl von partiellen Rastmitteln vorgesehen sind und dass durch diese ineinandergreifenden Rastmittel die lagegerechte Zuordnung des ersten und des zweiten Bauteiles 2, 11 sichergestellt werden soll.

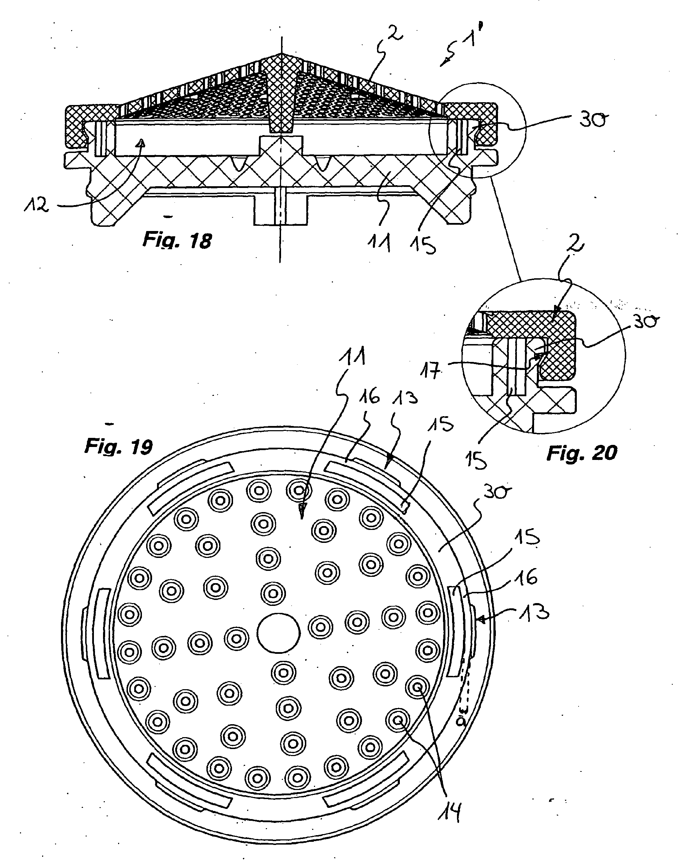

Demgegenüber weist das Einbauteil 1' in den Fig. 18 bis 20 an dem in die Aufnahmeöffnung 12 des Vorsatzsiebes 2 einsetzbaren Ringbund 30 des Strahlzerlegers 11 eine Anzahl von radial nach außen vorstehenden Rastnocken 13 auf, die in einer Rastnut 17 an dem die Aufnahmeöffnung 12 begrenzenden Innenumfang des Vorsatzsiebes 2 einrasten können. Im Bereich der Rastnocken 13 ist jeweils ein Schlitz 15 oder dergleichen Aussparung vorgesehen, der mit einem Abstand a vom Außenumfang des als Ringbund 30 ausgebildeten Teilbereichs des Strahlzerlegers 11 angeordnet ist. Jeder dieser Schlitze 15 weist eine in Umfangsrichtung orientierte Längserstreckung auf. Zwischen dem Innenumfang des Strahlzerlegers 11 und den benachbarten Schlitzen 15 wird jeweils ein das außenumfangseitige Rastmittel 13 tragender Wandungsabschnitt 16 begrenzt, der in dem Schlitz 15 oder dergleichen Aussparung federelastisch eingelenkt werden kann.

Aus einem Vergleich der Figuren 15 bis 17 beziehungsweise 18 bis 20 einerseits und der Figuren 4 bis 6 beziehungsweise 7 bis 9 andererseits wird deutlich, dass das Vorsatzsieb 2 nicht nur in einer Aufnahmeöffnung 12 am Strahlzerleger 11 montiert werden kann, sondern dass vielmehr auch der Strahlzerleger 11 in einer Aufnahmeöffnung 12 des Vorsatzsiebes 2 montierbar ist.

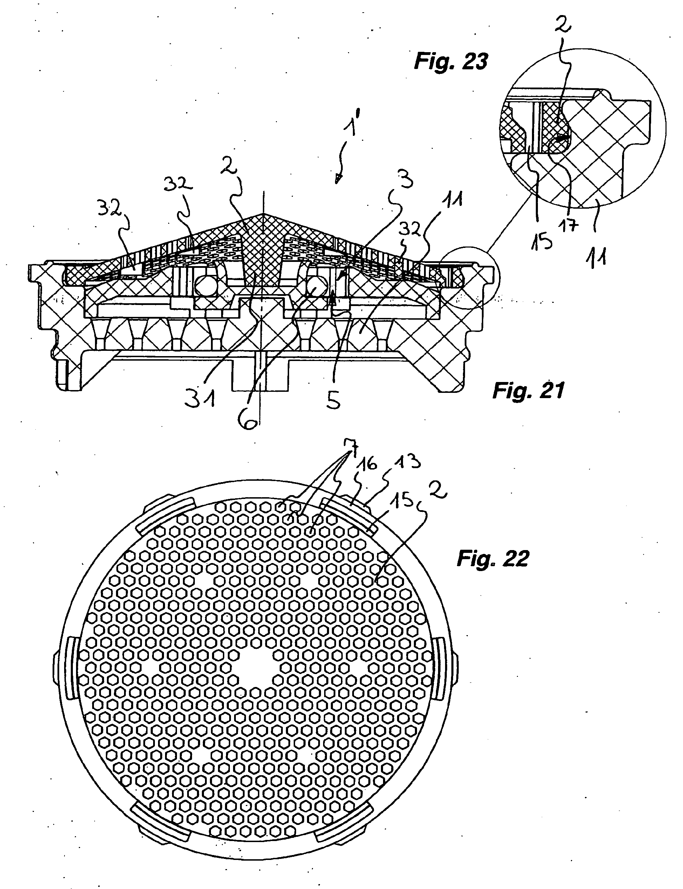

In den Figuren 21 bis 23 ist ein sanitäres Einbauteil 1' dargestellt, das in ein nicht weiter gezeigtes Auslaufmundstück einsetzbar ist, welches am Wasserauslauf einer sanitären Auslaufarmatur angeschraubt werden kann. Das sanitäre Einbauteil 1' weist ein zuströmseitiges Vorsatzsieb 2 auf, dem abströmseitig ein Durchflussmengenregler 3 und ein Strahlregler nachgeschaltet sind, von welchem Strahlregler hier allerdings nur der Strahlzerleger 11 gezeigt ist.

Von den lösbar miteinander verbindbaren Bestandteilen 2, 3 und 11 ist der abströmseitige Strahlregler dazu bestimmt, aus dem durchströmenden Wasser einen homogenen, perlend-weichen Wasserstrahl zu formen. Mit dem zwischen Strahlzerleger 11 und Vorsatzsieb 2 angeordneten Durchflussmengenregler 3 wird die Wassermenge pro Zeiteinheit auf einen festgelegten Maximalwert eingeregelt. Das Vorsatzsieb 2 hat u.a. die Aufgabe, die abströmseitig nachgeschalteten sanitären Einsetzteile 3, 11 vor den im Wasser eventuell mitgeführten Schmutzpartikeln zu bewahren, die anderenfalls die Durchflussöffnungen dieser Einsetzteile 3, 11 verstopfen und deren Funktion beeinträchtigen könnten.

Das Vorsatzsieb 2 ist als einstückiges Kunststoffspritzgussteil ausgebildet und aus einem transparenten Kunststoffmaterial hergestellt. Da das Vorsatz- oder Filtersieb 2 aus transparentem Kunststoffmaterial hergestellt ist, gibt es die Sicht auf die Zuströmseite des mit dem Vorsatzsieb 2 lösbar verbundenen sanitären Einsetzteiles 3 frei. In Fig. 21 ist erkennbar, dass der Durchflussmengenregler 3 einen Steuerspalt 5 hat, dessen Durchflussquerschnitt mittels eines unter dem Druck des zuströmenden Wassers verformbaren O-Ring 6 aus elastischem Material veränderbar ist. Da der O-Ring 6 beweglich am Durchflussmengenregler 3 befestigt ist, besteht die Gefahr, dass sich der O-Ring vom Durchflussmengenregler 3 lösen und verloren gehen kann. Das aus transparentem Material bestehende Vorsatzsieb 2 sichert nun die Funktionalität des Durchflussmengenreglers 3 in mehrfacher Weise; das Vorsatzsieb 2 filtert nämlich zum einen die im Wasser mitgeführten Schmutzpartikel aus, die anderenfalls die Funktion der Einsetzteile 3, 11 beeinträchtigen könnten -, zum anderen erlaubt es eine Sichtkontrolle auf die Abströmseite des Filter-oder Vorsatzsiebes 2 und die dahinterliegenden Einsetzteile. Blickt man von oben durch das aus transparentem Material bestehende Vorsatzsieb 2 hindurch, so lässt sich erkennen, ob das sanitäre Einbauteil 1 in Fig. 21 überhaupt mit einem Mengenregler 3 bestückt ist. Weist dieser Durchflussmengenregler 3 zudem noch eine Farbcodierung auf, so lässt sich bereits durch das Vorsatzsieb 2 erkennen, welche hydraulische Durchflussleistung der zwischen Vorsatzsieb 2 und Strahlzerleger 11 angeordnete Durchflussmengenregler 3 hat. Mittels einer bloßen Sichtkontrolle durch das Vorsatzsieb 2 ist gegebenenfalls auch ohne weiteres erkennbar, ob der Durchflussmengenregler 3 den benötigen O-Ring 6 aufweist. Da der Durchflussmengenregler 3 zwischen dem Vorsatzsieb 2 einerseits und dem mit dem Vorsatzsieb 2 verrasteten Strahlzerleger 11 andererseits eingeklemmt ist, sichert das Vorsatzsieb 2 den Durchflussmengenregler 3 auch gegen einen nachträglichen Verlust seines O-Rings 6.

Aus Fig. 21 wird deutlich, dass sich der Durchflussmengenregler 3 auf der zuströmseitigen Stirnseite des Strahlzerlegers 11 und das transparente Vorsatzsieb 2 seinerseits mit einem zentralen Stützsteg 31 auf dem Durchflussmengenregler 3 abstützt. Bei verschmutzten Sieboberflächen des Vorsatzsiebes 2 wird nämlich die Belastung, die von oben auf das Vorsatzsieb 2 wirkt, sehr groß. Um zu verhindern, dass das Vorsatzsieb 2, welches aus transparentem Material gefertigt ist und eventuell eine reduzierte Eigensteifigkeit aufweist, in solchen Belastungsfällen kollabiert, stützt sich das Vorsatzsieb 2 über seinen zentralen Stützsteg 31 und/oder über zusätzliche, am Siebumfang verteilte Abstützungen 32 auf dem Reglergehäuse des Durchflussmengenreglers 3 ab. In Fig. 21 ist erkennbar, dass zwischen dem Vorsatzsieb 2 und dem Durchflussmengenregler 3 in unbelasteter Gebrauchsstellung zunächst noch ein Luftspalt insbesondere im Bereich der über den Siebumfang verteilt angeordneten Abstützungen 32 verbleibt. Erst wenn sich das Vorsatzsieb 2 unter der Last des zuströmenden Wassers deutlich zu verformen beginnt, können sich die Abstützungen 32 am Durchflussmengenregler 3 abstützen und das Vorsatzsieb 2 gegen ein übermäßiges Verformen sichern.

Mit der vorliegenden gekürzten Fassung des Anmeldungstextes ist kein Verzicht auf einzelne Merkmale aus der im ursprünglich eingereichten Anmeldungstext offenbarten technischen Lehre verbunden. Vielmehr behält es sich die Anmelderin vor, im weiteren Verlauf des Anmeldungs- und Prüfungsverfahrens erforderlichenfalls wieder auf Merkmale und Textteile des ursprünglich eingereichten Anmeldungstextes zurückzugreifen.

## Patentansprüche

1. Sanitäres Einbauteil mit einem für Wasserauslaufarmaturen bestimmten Filtersieb (2), das als einstückiges Kunststoffspritzgussteil ausgebildet ist und eine Anzahl von Durchfluss- oder Sieböffnungen (7) hat, mit einem Strahlregler (4), der dem Filtersieb (2) abströmseitig nachgeschaltet ist und mit einem Durchflussmengenregler (3), der zwischen dem Filtersieb (2) und dem Strahlregler (4) angeordnet ist, **dadurch gekennzeichnet, dass** der Durchflussmengenregler eine Farbcodierung aufweist, die die hydraulische Durchflussleistung anzeigt und durch bloße Sichtkontrolle durch das aus transparentem Kunststoffmaterial bestehende Filtersieb erkennbar ist.

2. Einbauteil nach Anspruch 1, **dadurch gekennzeichnet, dass** das Filtersieb (2) abströmseitig mit zumindest einem sanitären Einsetzteil (3, 4, 11) lösbar verbindbar ist.

3. Einbauteil nach Anspruch 1 oder 2, **dadurch gekennzeichnet, dass** das Filtersieb (2) die Sicht auf die Zuströmseite des Durchflussmengenreglers (3) freigibt oder freihält.

4. Einbauteil einem der Ansprüche 1 bis 3, **dadurch gekennzeichnet, dass** der Durchflussmengenregler (3) einen Steuerspalt (5) hat, dessen Durchflussquerschnitt mittels eines unter dem Druck des zuströmenden Wassers verformbaren O-Rings (6) aus elastischem Material veränderbar ist und dass der O-Ring (6) durch das dem Durchflussmengenregler (3) zugeordnete Filtersieb (2) sichtbar ist.

5. Einbauteil nach einem der Ansprüche 1 bis 4, **dadurch gekennzeichnet, dass** das Filtersieb (2) in Richtung zur Zuströmseite konvex oder kegelförmig gewölbt ist.

6. Einbauteil nach einem der Ansprüche 1 bis 5, **dadurch gekennzeichnet, dass** die Sieböffnungen (7) des Filtersiebes (2) etwa koaxial zueinander und vorzugsweise achsparallel zur Sieb-Längsachse angeordnet sind.

7. Einbauteil nach einem der Ansprüche 1 bis 6, **dadurch gekennzeichnet, dass** das Filtersieb (2) mittels einer Rastverbindung mit dem zumindest einen sanitären Einsetzteil (11) lösbar verbindbar ist.

8. Einbauteil nach einem der Ansprüche 1 bis 7, **dadurch gekennzeichnet, dass** das Filtersieb (2), der Strahlzerleger (11) oder dergleichen Einsetzteil einen Ringbund (30) hat, und dass dieser Ringbund (30) mit zumindest einem Rastvorsprung (13), einer Rastnut (17) oder dergleichen Rastmittel eines benachbarten Einsetzteiles (3, 11) lösbar verbindbar ist, welches (9) an dessen zugewandter Stirnseite vorgesehen ist.

9. Einbauteil nach einem der Ansprüche 1 bis 8, **dadurch gekennzeichnet, dass** das Filtersieb (2) in ihrem lichten Sieböffnungsquerschnitt sechseckige und wabenförmig angeordnete Sieböffnungen (7) hat.

## Claims

1. Sanitary insert having a filter sieve (2) intended for water outlet fittings, which is configured as a one-piece injection moulded plastics part and has a number of throughflow or sieve openings (7), having an aerator (4) which is provided downstream of the filter sieve (2) on the outflow side, and having a flow regulator (3) which is arranged between the filter sieve (2) and the aerator (4), **characterised in that** the flow regulator has a colour coding which indicates the hydraulic flow rate and which can be detected by mere visual inspection through the filter sieve that is made of transparent plastics material.

2. Insert according to claim 1, **characterised in that** the filter sieve (2) can be releasably connected on the outflow side to at least one sanitary insert (3, 4, 11).

3. Insert according to claim 1 or 2, **characterised in that** the filter sieve (2) provides or maintains a view of the inflow side of the flow regulator (3).

4. Insert according to one of claims 1 to 3, **characterised in that** the flow regulator (3) has a control slot (5) the cross-section of flow of which can be altered by means of an O-ring (6) of elastic material that is deformed under the pressure of the inflowing water, and **in that** the O-ring (6) is visible through the filter sieve (2) associated with the flow regulator (3).

5. Insert according to one of claims 1 to 4, **characterised in that** the filter sieve (2) protrudes towards the inflow side in a convex or conical shape.

6. Insert according to one of claims 1 to 5, **characterised in that** the sieve openings (7) of the filter sieve (2) are arranged substantially coaxially with one another and preferably paraxially to the longitudinal axis of the sieve.

7. Insert according to one of claims 1 to 6, **characterised in that** the filter sieve (2) can be releasably connected to the at least one sanitary insert (11) by means of a latching connection.

8. Insert according to one of claims 1 to 7, **characterised in that** the filter sieve (2), the flow diffuser (11) or similar insert has a ring flange (30), and **in that** this ring flange (30) can be releasably connected to at least one latching projection (13), a latching groove (17) or similar latching means of an adjacent insert (3, 11), which (9) is provided on the end facing it.

9. Insert according to one of claims 1 to 8, **characterised in that** the filter sieve (2) has hexagonal sieve openings (7) arranged in a honeycomb shape in its internal sieve opening cross-section.

## Revendications

1. Insert sanitaire avec un tamis filtrant (2) destiné aux robinetteries de sortie d'eau qui est réalisé sous la forme d'une pièce en matière plastique moulée par injection d'un seul tenant et comporte un certain nombre d'ouvertures de passage ou de filtrage (7), avec un régulateur de jet (4) qui est placé en aval du tamis filtrant (2), côté sortie d'eau, et avec un régulateur de débit (3) qui est disposé entre le tamis filtrant (2) et le régulateur de jet (4), **caractérisé en ce que** le régulateur de débit présente un codage par couleur qui indique la capacité de débit hydraulique et est reconnaissable par simple contrôle visuel à travers le tamis filtrant en matériau plastique transparent.

2. Insert selon la revendication 1, **caractérisé en ce que** le tamis filtrant (2) peut être assemblé côté sortie d'eau de manière détachable avec au moins une pièce rapportée sanitaire (3, 4, 11).

3. Insert selon la revendication 1 ou 2, **caractérisé en ce que** le tamis filtrant (2) autorise ou préserve la vue sur le côté arrivée d'eau du régulateur de débit (3).

4. Insert selon une des revendications 1 à 3, **caractérisé en ce que** le régulateur de débit (3) présente une fente de commande (5) dont la section de passage est modifiable au moyen d'un joint torique (6) en matériau élastique déformable sous la pression de l'eau affluante et que le joint torique (6) est visible à travers le tamis filtrant (2) associé au régulateur de débit (3).

5. Insert selon une des revendications 1 à 4, **caractérisé en ce que** le tamis filtrant (2) présente une courbure convexe ou conique en direction du côté arrivée d'eau.

6. Insert selon une des revendications 1 à 5, **caractérisé en ce que** les ouvertures de filtrage (7) du tamis filtrant (2) sont disposées à peu près coaxialement les unes aux autres et de préférence parallèlement à l'axe longitudinal du tamis.

7. Insert selon une des revendications 1 à 6, **caractérisé en ce que** le tamis filtrant (2) peut être assemblé de manière détachable avec ladite au moins une pièce rapportée sanitaire (11) au moyen d'un assemblage par enclenchement.

8. Insert selon une des revendications 1 à 7, **caractérisé en ce que** le tamis filtrant (2), le brise-jet (11) ou une pièce rapportée analogue présente un collet annulaire (30) et que ce collet annulaire (30) peut être assemblé de manière détachable avec au moins une saillie d'enclenchement (13), une rainure d'enclenchement (17) ou un moyen d'enclenchement analogue d'une pièce rapportée (3, 11) adjacente, lequel (9) est prévu sur la face frontale de celle-ci qui est tournée vers lui.

9. Insert selon une des revendications 1 à 8, **caractérisé en ce que** le tamis filtrant (2) présente, dans la section libre de ses ouvertures de filtrage, des ouvertures de filtrage (7) hexagonales et disposées en nids d'abeille.
